# EUROPÄISCHE PATENTANMELDUNG

(11) **EP 0 723 213 A1**
(43) Veröffentlichungstag der Anmeldung: **24.07.1996**
(21) Anmeldenummer: 95120493.2
(22) Anmeldetag: 22.12.1995
(51) Int. Cl.: G04C 3/12, H01L 41/09

(54) **Piezoelektrischer Motor mit Einrichtung, die Informationen bezüglich der Rotorposition und/oder -drehzahl liefert**

(30) Priorität: 29.12.1994 CH 3953/94
(71) Anmelder: Eta SA Fabriques d'Ebauches, 2540 Grenchen (CH)
(72) Erfinder: Péclat, Christian, CH-2000 Neuchâtel (CH); Trümpy, Kaspar, CH-4500 Soleure (CH)
(74) Vertreter: Patry, Didier Marcel Pierre

(57) **Zusammenfassung**

Entlang der innenliegenden Rotorlauffläche (21) eines ringförmigen Rotors (20) sind abwechslungsweise Bereiche (26a-c) von geringer (29) Wandstärke und Bereiche (25a-c) von grosser (23) Wandstärke vorgesehen, welche sich hinsichtlich dem akustischen Impedanzspektren unterscheiden. Im Betriebszustand, d.h. wenn der Rotor (20) dreht, werden die genannten Bereiche (25a-c, 26a-c) durch den piezoelektrischen Erreger (15) des Stator (13) abwechslungsweise angeregt. Das akustische Impedanzspektrum, das sich dabei fortlaufend periodisch verändert, beeinflusst das elektrische Impedanzspektrum des Motors (10) in analoger Weise. Diese Änderungen wird über die Speiseanschlüsse des Motors (10) gemessenen und als relative Positionsänderung zwischen Stator (13) und Rotor (20) interpretiert.

## Beschreibung

Die Erfindung betrifft einen piezoelektrischen Motor nach dem Oberbegriff des Anspruchs 1.

Einem solchen Motor liegt der reziproke, piezo-elektrische Effekt zugrunde. Dabei wird ein piezoelektrischer Erreger durch eine Wechselspannung angeregt und der Stator in mechanische Schwingung im beispielsweise Ultraschallfrequenzbereich versetzt. Durch geeignete konstruktive Massnahmen kann durch die Schwingung des Stators eine Rotationsbewegung des Rotors erzielt werden. Da Motoren dieser Art ein asynchrones Verhalten aufweisen, muss zwecks Ermittlung der Rotorposition und -drehzahl eine zusätzliche Einrichtung vorgesehen werden.

Ein aus der EP 505 848 bekannt gewordener Piezomotor weist eine mit dem Stator fest verbundene, gedruckte Schaltung mit radial nach aussen verlaufenden Kontakten auf. Am Rotor ist ein Schleifer angebracht, so dass mittels dieser Einrichtung Informationen bezüglich der Rotorposition und -drehzahl ausserhalb des Motors vorliegen.

Die Erfahrungen des Betriebes mit solchen Einrichtungen haben trotz grundsätzlicher Funktionsfähigkeit gezeigt, dass deren mechanischer Abrieb die Lebensdauer des gesamten Motors reduziert und zudem die Herstellungskosten erheblich erhöht. Ausserdem fällt besonders bei kleinen Motoren der zusätzliche Platzbedarf und die Beeinträchtigung des Wirkungsgrades durch die Reibung der Kontakte ins Gewicht.

Es sind auch optische Einrichtungen bekannt, die mittels Lichtschranken die Rotorposition und/oder Rotordrehzahl ermitteln.

Auch bei solchen Lösungen sind der Aufwand an zusätzlichen Elementen im Motor und die damit verbundenen Herstellungskosten beträchtlich. Ebenfalls bewirkt diese Einrichtung besonders bei kleinen Motoren eine Vergrösserung der Motorabmessungen sowie durch die zusätzliche Energieaufnahme zur Speisung der Lichtschranken eine Verminderung des Wirkungsgrades.

Der Erfindung liegt daher die Aufgabe zugrunde, einen piezoelektrischen Motor mit einer Einrichtung zu schaffen, welche zuverlässig Informationen in Bezug auf die Rotorposition und/oder -drehzahl liefert, dabei keinen nennenswerten Verschleiss und somit eine lange Lebensdauer aufweist, keine Vergrösserung der Motorabmessungen hervorruft, eine möglichst geringe zusätzliche Energieaufnahme erfordert sowie einfach und kostengünstig herzustellen ist.

Die erfindungsgemässe Lösung dieser Aufgabe ergibt sich aus den Merkmalen des Anspruchs 1.

Durch die erfindungsgemässe Lösung können Informationen bezüglich der Rotorposition sowie der Rotordrehzahl direkt und zuverlässig über die Speiseanschlüsse des Motors in Erfahrung gebracht werden. Zu diesem Zweck bedarf es keiner zusätzlicher Elemente im oder am Motor selbst, wodurch die Lebensdauer des Motors nicht herabgesetzt wird, seine Abmessungen unverändert bleiben und auch die Lebensdauer nicht vermindert wird. Es sind lediglich geringfügige Änderungen am Rotor sowie an der Speiseeinrichtung vorzunehmen.

Gemäss einer bevorzugten Ausführungsform weist der Rotor beispielsweise Bereiche mit kreissegmentförmigen Schlitzen auf, die lokal betrachtet durch einen anderen Wert der akustischen Impedanz gekennzeichnet sind, als dies bei den Vollmaterialbereichen der Fall ist. Dadurch variiert im Betrieb mindestens eine elektrische Grösse der Speisung, die als Träger der Positions- und/oder Drehzahlinformationen dient. Die vorgesehenen Schlitze stellen keinen zusätzlichen Herstellungsaufwand dar, da sie beispielsweise gleichzeitig beim Spritzgiessen des Rotors erzeugt werden können.

Eine erste vorteilhafte Speise- und Messeinrichtung regelt die Frequenz hinsichtlich einer konstanten, vorzugsweise den Wert Null betragenden Phasenverschiebung zwischen Speisespannung und -strom und interpretiert den zeitlich nicht gleichförmigen, periodischen Verlauf der Frequenz als ändernde Position des Rotors gegenüber dem Stator. Diese Speise- und Messeinrichtung ist von einfachem Aufbau und zieht nur geringe zusätzliche Kosten nach sich.

Bei einer zweiten vorteilhaften Lösung gibt der piezoelektrische Motor die Betriebsfrequenz seinerseits vor, welche im Betrieb ebenfalls auf Grund der Schlitze einen zeitlich nicht gleichförmigen, periodisch ändernden Verlauf aufweist, der von einer Speise- und Messeinrichtung gemessen und als ändernde Rotorposition und/oder Rotordrehzahl interpretiert wird. Diese Lösung ermöglicht einen hinsichtlich des Wirkungsgrades günstigen Betrieb und ist ebenfalls sehr kostengünstig.

Die Erfindung ist nachfolgend in verschiedenen Ausführungsbeispielen erläutert, wobei auf die Zeichnungen Bezug genommen wird. Es zeigen :
- Fig.1 ein erstes Ausführungsbeispiel eines piezoelektrischen Motors;
- Fig.2a ein zweites Ausführungsbeispiel eines Rotors in Schnittansicht nach der Linie IIa-IIa in Fig.2b;
- Fig.2b das zweite Ausführungsbeispiel eines Rotors im Querschnitt nach der Linie IIb-IIb in Fig.2a;
- Fig.3 das Blockschaltbild einer ersten Speise- und Messeinrichtung.

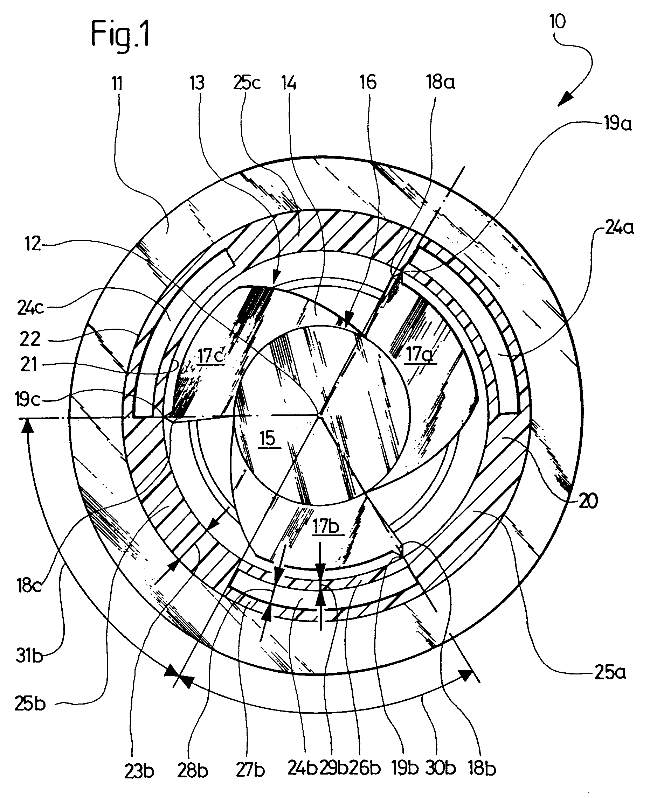

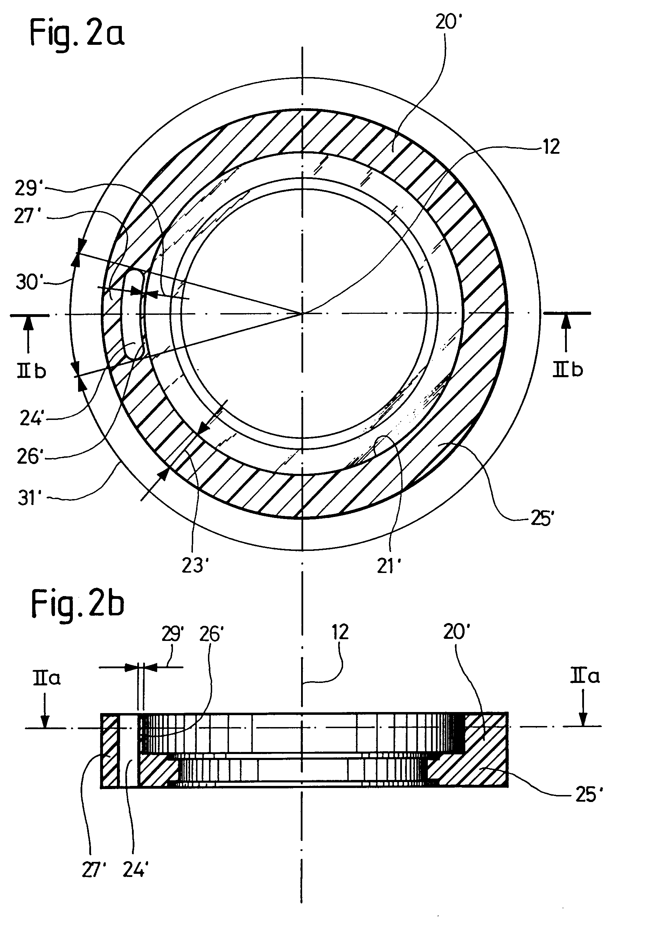

Der in Fig.1 als erstes Ausführungsbeispiel dargestellte piezoelektrische Motor 10 ist im folgenden nicht vollständig beschrieben. Für konstruktive Einzelheiten, die nicht in direktem Zusammenhang mit der Erfindung stehen, wird das erste, in den Figuren 1 und 2 gezeigte Ausführungsbeispiel der Schrift EP 505 848 herangezogen. Dies gilt beispielsweise für den Stator.

Der piezoelektrischer Motor 10 ist fest auf einer scheibenförmigen Grundplatte 11 montiert. In seinem Zentrum ist eine Drehachse 12 definiert, die nachfolgend als Bezugsachse aufgefasst wird.

Ein flach ausgebildeter Stator 13 ist starr mit der Grundplatte 11 verbunden und besteht im wesentlichen aus einer Resonatorplatte 14 und einem fest darauf angebrachten, beispielsweise aufgeklebten, scheibenförmigen piezokeramischen Erreger 15, dessen elektrische Speiseanschlüsse nicht dargestellt sind. Dieser Erreger 15 kann aus einem keramischen Werkstoff hergestellt sein. Die Resonatorplatte 14 weist einen vom Erreger 15 überdeckten, scheibenförmigen Bereich 16 und drei von diesem nach aussen weisende Resonatorflügel 17a, 17b, 17c auf, die dem Stator 13 ein propellerartiges Aussehen verleihen.

An jedem der drei Resonatorflügel 17a-c ist ein nach aussen weisender, meisselförmiger Resonatorzahn 18a, 18b, 18c ausgebildet, der im Sinne der Geometrie in eine Strecke mündet, die parallel zur Drehachse 12 verläuft. In Realität hingegen handelt es sich dabei nicht um eine Strecke, sondern um eine kleine Fläche. Demnach weisen die Resonatorzähne 18a-c je eine sogenannte Abstossfläche 19a, 19b, 19c auf, welche in Bezug auf die Drehachse 12 ein Segment eines Zylindermantels bildet.

An diesen Abstossflächen 19a-c liegt ein ringförmiger, drehbar auf der Grundplatte 11 gelagerter Rotor 20 mit einer inneren zylindermantelförmigen Rotorlauffläche 21 an. Die Rotorlauffläche 21 und eine konzentrisch zu dieser verlaufende Aussenfläche 22 definieren eine dazwischenliegende Rotorbreite 23.

Drei untereinander identische, durch den Rotor 20 hindurchführende Schlitze 24a, 24b, 24c weisen die Form eines Kreisringsektors auf und sind jeweils voneinander durch drei untereinander identische Vollmaterialbereiche 25a, 25b, 25c getrennt. Repräsentativ für alle drei Schlitze 24a-c und alle drei Vollmaterialbereiche 25a-c wird im folgenden der Schlitz 24b und der Vollmaterialbereich 25b beschrieben, wobei sich die Beschreibung nach wie vor auf die Drehachse 12 bezieht:

Der Schlitz 24b trennt den Rotor 20 lokal in einen inneren dünnwandigen Rotorbereich 26b und einen äusseren Rotorbereich 27b. In radialer Richtung gemessen weist der Schlitz 24b eine Breite 28b und der innere Rotorbereich 26b eine Breite 29b auf. Der Schlitz 24b dehnt sich über einen Winkel 30b und der Vollmaterialberich 25b über eine Winkel 31b aus, welche beide 60° messen.

Die Funktionsweise des in Fig.1 gezeigten erfindungsgemässen piezoelektrischen Motors 10, dessen piezokeramischer Erreger 15 beispielsweise mit einer Sinuswechselspannung von 200KHz gespeist wird, ist wie folgt :

Die sich vom piezokeramischen Erreger 15 radial nach aussen in die Resonatorflügel 17a-c ausbreitenden Ultraschallschwingungen bewirken eine zyklische, näherungsweise elliptische Bewegung der drei Resonatorzähne 18a-c und ihrer Abstossflächen 19a-c in einer zur Drehachse 12 orthogonalen Ebene. Durch diese Bewegung wird der Rotor 20 ruckweise angetrieben. Zur Erläuterung des Antriebsprinzips des hier in Fig.1 gezeigten piezoelektrischen Motors 10 kann grundsätzlich die Schrift EP 505 848 herangezogen werden, obwohl die Anzahl der Resonatorflügel verschieden ist. Mit deren drei wird jedoch ein ausgeprägterer Antriebseffekt erzielt.

Die Art und Weise, wie die Resonatorflügel 17a-c, bzw. die Resonatorzähne 18a-c mit ihren Abstossflächen 19a-c schwingen, hängt unter anderem von der Beschaffenheit, d.h. von den konstruktiven Massnahmen des anliegenden, als Last wirkenden Rotors 20 ab. Das Schwingungsverhalten des Motors 10 als Ganzes oder auch nur Bestandteile davon, wie zum Beispiel Bereiche des Rotors 20, können mittels einer physikalischen Grösse, der akustische Impedanz, beschrieben werden.

Dabei kann nur ein einzelner Wert der akustischen Impedanz bei einer bestimmten Frequenz oder aber auch der Verlauf der akustischen Impedanz in Funktion der Frequenz innerhalb einer bestimmten Bandbreite betrachtet werden. Im gesamten Text inklusive den Ansprüchen wird für den Verlauf der akustischen Impedanz in Funktion der Frequenz der Begriff des akustischen Impedanzspektrums verwendet. Dieser Begriff bezieht sich also ausdrücklich auf das akustische Impedanz-Frequenz-Diagramm und nicht auf das akustische Impedanz-Zeit-Diagramm. Weiter gilt, dass bereits dann von zwei voneinander verschiedenen akustischen Impedanzspektren gesprochen wird, wenn diese sich in mindestens einem einzelnen Impedanzwert bei einer bestimmten Frequenz unterscheiden. Dabei ist es einerlei, ob der Graph des akustischen Impedanzspektrum innerhalb der betrachteten Bandbreite kontinuierlich verläuft, Lücken aufweist oder nur aus einzelnen Punkten besteht.

Da der piezoelektrische Motor 10 elektrisch gespeist wird, erscheint dieser aus der Sicht der Spannungsquelle als elektrische Impedanz, die sein Verhalten als Last beschreibt. Dabei kann nur ein einzelner Wert der elektrischen Impedanz bei einer bestimmten Frequenz oder aber auch der Verlauf der elektrischen Impedanz in Funktion der Frequenz innerhalb einer bestimmten Bandbreite betrachtet werden. Im gesamten Text inklusive den Ansprüchen wird für den Verlauf der elektrischen Impedanz in Funktion der Frequenz der Begriff des elektrischen Impedanzspektrums verwendet, analog zum obenerwähnten Fall der akustischen Impedanzspektrums. Die elektrische Impedanz ist im folgenden immer aus der Sicht der Spannungsquelle zu betrachtet.

Zwischen der akustischen und der elektrischen Impedanz besteht eine enge Beziehung. Änderungen des akustischen Impedanzspektrums beeinflussen das elektrische Impedanzspektrum. Der diesbezügliche wertmässiger Zusammenhang ist für die hier vorgestellte Erfindung jedoch nicht wesentlich. Die erfinderische Lösung basiert vielmehr auf der Tatsache, dass sich das akustische Impedanzspektrum auf das über die nichtgezeigten Motoranschlüsse messbare elektrische Impedanzspektrum in äquivalenter Weise überträgt.

Dabei nehmen jedoch nur jeweils diejenigen Bereiche des Rotors 20 Einfluss auf das akustische Impedanzspektrum, in deren unmittelbarer Nähe sich die Abstossflächen 19a-c gerade befinden, d.h. nur die den Abstossflächen 19a-c benachbarten, durch sie unmittelbar angeregten Bereiche des Rotors 20. Der Rotor 20 weist mehrere aufeinanderfolgende Bereiche auf, die jeweils durch lokal betrachtet verschiedene akustische Impedanzspektren gekennzeichnet sind, so dass sich auch das elektrische Impedanzspekrum des gesamten Motors 10 in Abhängigkeit der relativen Position zwischen Stator 13 und Rotor 20 ändert. Der in der Schrift EP 505 848 gezeigte Rotor ist hingegen völlig rotationssymetrisch, weshalb sich das elektrische Impedanzspektrum in Abhängigkeit der Rotorposition nicht ändert. Die Änderung des elektrischen Impedanzspektrums, währenddem der Rotor 20 dreht, kann mit einer einfachen Messeinrichtung, die ebenfalls den Motor 10 speist, erfasst und als Rotorposition und/oder -drehzahl interpretiert werden. Auf verschiedene Speise- und Messeinrichtungen wird später eingegangen.

Das akustisches Impedanzspektrum schwingender Elemente ist grundsätzlich von deren Trägheit, Elastizität und inneren Reibungsverluste abhängig. Durch geeignete konstruktive Massnahmen lassen sich diese drei Grössen entlang der Rotorlauffläche 21 gezielt variieren. Die inneren Reibungsverluste sind jedoch durchwegs so klein wie möglich zu halten, damit der Wirkungsgrad nicht beeinträchtigt wird. Es kommen daher als sich entlang der Rotorlauffläche 21 ändernde Grössen nur noch die Trägheit und die Elastizität in Frage. Gemäss Fig.1 erzeugen die Schlitze 24a-c im Rotor 20 dünnwandige, innere Rotorbereiche 26a-c von geringer Breite 29a-c, welche weniger steif bzw. elastischer als die Vollmaterialbereiche 25a-c sind. Diese unterschiedlichen Eigenschaften schlagen sich letztendlich in einem unterschiedlichen elektrischen Impedanzspektrum nieder. Die äusseren Rotorbereiche 27a-c sorgen für genügende Stabilität des Rotors 20, ohne die gewünschten, besonderen Schwingungseigenschaften der inneren Bereiche 26a-c, die sich von denjenigen der Vollmaterialbereiche 25a-c deutlich unterscheiden, zu beeinträchtigen.

Da sich die Schlitze 24a-c und die Vollmaterialbereiche 25a-c um den Winkel 30a-c bzw. 31a-c von jeweils 60° erstrecken, befinden sich immer entweder alle drei. Schlitze 24a-c oder alle drei Vollmaterialbereiche 25a-c in unmittelbarer Nachbarschaft mit den drei Abstossflächen 19a-c. Dadurch, dass alle drei Abstossflächen 19a-c den gleichen Betriebsbedingungen ausgesetzt sind, führt die Überlagerung ihrer Einzelwirkungen zu einer verstärken Gesamtwirkung, d.h. schlussendlich im Betrieb zu einer ausgeprägteren Schwankung des Wertes der elektrischen Impedanz bei Betriebsfrequenz, bzw. zu einer ausgeprägteren Änderung des elektrischen Impedanzspektrums. Im genannten Fall ergibt sich eine Auflösung von eins zu drei, d.h. bei einer Umdrehung des Rotors 20 tritt alternativ dreimal ein erstes und dreimal ein zweites elektrisches Impedanzspektrum auf. Anders ausgedrückt erreicht die elektrischen Impedanz bei Betriebsfrequenz dreimal einen Maximalwert und dreimal einen Minimalwert. Deshalb kann beispielsweise durch fortlaufendes Zählen dieser Extremalwerte auf die Drehzahl oder von einer definierten Ausgangsposition ausgehend auf die Position des Rotors 20 geschlossen werden. Die hier vorgeschlagene Auflösung von eins zu drei ist für viele Anwendungen ausreichend.

Die äusseren Rotorbereiche 27a-c geben dem Rotor 20 weitgehend denjenigen Grad an Stabilität, wie er bei einem Rotor ohne Schlitze 24a-c vorhanden ist.

Anstelle des elektrischen Impedanzspektrums kann selbstverständlich auch das elektrische Admittanzspektrum herangezogen werden, wobei dieses zum Erstgenannten reziprok ist. Entlang der Frequenzskala des elektrischen Impedanzspektrums lassen sich mehrere lokale Minima finden, die als Moden bezeichnet werden. Bei jeder Mode tritt eine spezifische Deformation der Resonatorplatte 14 auf. Bei einer bestimmten Mode kann eine sehr ausgeprägte Deformation auftreten, die jedoch nur in radialer oder axialer Richtung wirkt, d.h. die Abstossflächen 19a-c vibrieren nur in radialer Richtung, was bedeutet, dass kein Antrieb des Rotors 20 erfolgt. Die Wahl der geeigneten Mode richtet sich also hauptsächlich nach dem grösstmöglichen Antriebseffekt, d.h. nach der grösstmöglichen Drehzahl des Rotors 20. Die gewählte Mode wird im folgenden Grundmode genannt. Sie nimmt mit zunehmender Speisespannung und mit zunehmender Temperatur geringfügig um wenige KHz ab. Ferner ist der Einfluss des Luftdruckes auf sie äusserst gering.

Für einen guten Wirkungsgrad ist es von grosser Bedeutung, die Form der Resonatorplatte 14 so zu wählen, dass auf der Frequenzskala in unmittelbarer Nähe der Grundmode keine weiteren lokalen Impedanzminima auftreten. Es soll nur gezielt diejenige Resonanz mit dem grössten Antriebseffekt angesprochen werden. Alle anderen Moden, auch die bezüglich der drei Resonatorflügel 17a-c asymetrischen, führen besonders bei einer Rechteckansteuerung zu bedeutenden Verlusten, wobei diese bei Moden hoher Frequenz besonders gross sind. Ferner wirkt sich ein möglichst ähnlicher Wert der akustischen Impedanz des Erregers 15 und der Resonatorplatte 14 bei bestimmter Frequenz postitiv auf den Gesamtwirkungsgrad aus, da in diesem Fall Leistungsanpassung herrscht. Mit der erfindungsgemässen Ausbildung des Stators 13, insbesondere der Resonatorplatte 14, und des Rotors 20 können alle genannten Anforderungen erfüllt werden.

Im allgemeinen sind die Moden ausser durch das lokale Impedanzminimum auch durch den Phasennulldurchgang gekennzeichnet. Mit dem Ziel, einen möglichst guten Wirkungsgrad zu erhalten, kann eine geringe, durch die statische Kapazität des Erregers 15 verursachte Phasenverschiebung mittels einer zusätzlichen, parallelgeschalteten Induktivität kompensiert werden.

Es gibt auch Moden, die einen umgekehrten Drehsinn des Rotors 20 zur Folge haben. Deshalb lässt sich lediglich durch Veränderung der Frequenz der Speisespannung, bzw. des Führungssignals 49 die Motordrehrichtung umkehren. Die Voraussetzungen für einen Bidirektional-Motor sind somit ebenfalls erfüllt.

Der Rotor 20 des in Fig.1 dargestellten piezoelektrischen Motors 10 kann durch einen Rotor 20' ausgetauscht werden, welcher als zweites Ausführungsbeispiel in Fig.2a und 2b abgebildet ist. Im folgenden wird vorwiegend auf die Unterschiede des Rotors 20' gegenüber dem Rotor 20 eingegangen:

Der Rotor 20' der Breite 23' mit einer Rotorlauffläche 21' weist nur einen einzigen Schlitz 24' auf und dementsprechend nur einen einzigen Vollmaterialbereich 25'. Der Schlitz 24' führt, wie aus Fig.2b hervorgeht, ebenfalls durch den Rotor 20' hindurch, erstreckt sich in Bezug auf die Drehachse 12 über einen Winkel 30' von etwa 20° und trennt den Rotor 20' lokal in einen inneren Rotorbereich 26' und einen äusseren Rotorbereich 27'. Der sich entlang des Schlitzes 24' erstreckende innere Rotorbereich 26' weist eine in radialer Richtung gemessene, im Verhältnis zur Breite 29a-c des ersten Ausführungsbeispiels deutlich geringere Breite 29' auf. Der Vollmaterialbereich 25' ersteckt sich über den Winkel 31' von 340°.

Die Funktionsweise eines piezoelektrischen Motors 10 mit dem in Fig.2a und 2b dargestellten Rotor 20' unterscheidet sich von demjenigen der Fig.1 wie folgt :

Da der Rotor 20' nur einen einzigen Schlitz 24' aufweist, befindet sich höchstens eine der Abstossflächen 19-c in der Nähe dieses Schlitzes 24'. Der Einfluss dieses einen Schlitzes 24' auf das akustische wie auch elektrische Impedanzspektrum fällt geringer aus als beim piezoelektrischen Motor 10 von Fig.1, bei welchem alle drei Abstossflächen 19a-c immer unter den gleichen Bedingungen schwingen. In einem Fall gemäss Fig.2 kann jedoch die Wirkung dieses einzelnen Schlitzes 24' durch die gezeigte dünnere Ausgestaltung des inneren Rotorbereiches 26', d.h. durch die geringere Breite 29' verstärkt werden. Unter diesen Umständen kann der Schlitz 24' sogar kürzer ausgebildet sein, d.h. der Winkel 30' kann gegenüber dem Winkel 30a-c von Fig.1 beispielsweise nur 20° betragen. Entscheidend ist, dass daraus zwei voneinander genügend verschiedene elektrischen Impedanzspektren hervorgehen. Unter Verwendung eines Rotors 20' oder eines ähnlichen Rotors kann sich das elektrische Impedanzspektrum in dem Masse verändern, dass das Impedanzminimum und der Phasennulldurchgang auf der Frequenzskala bereits um das ausreichende Mass von 1% der Betriebsfrequenz abwandert.

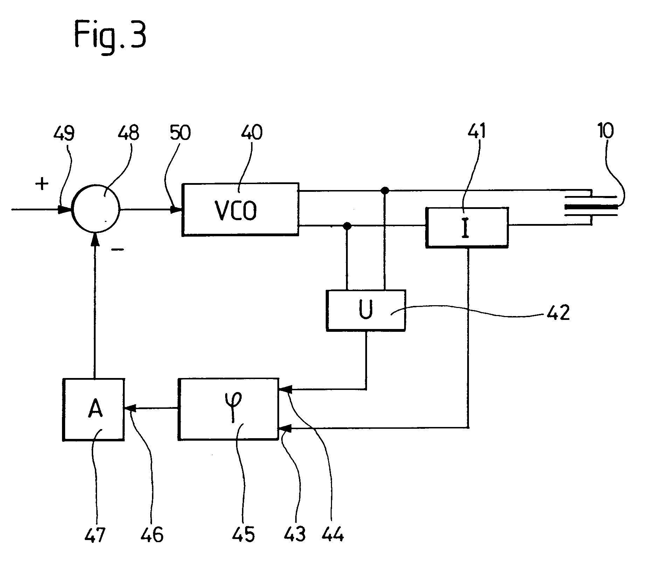

Fig.3 zeigt das Blockschaltbild einer ersten Speise- und Messeinrichtung für einen erfindungsgemässen Motor in Form eines geschlossenen Regelkreises, wobei nur der Motorstromkreis als elektrischer Schaltkreis dargestellt ist. Mit 40 ist ein als sogenannter VCO, bzw. "Voltage Controlled Oscillator" ausgebildeter Regler bezeichnet, an welchem ausgangsseitig ein piezoelektrischer Motor 10 angeschlossen ist. In Serie dazu ist eine Strommesseinheit 41 und parallel dazu eine Spannungsmesseinheit 42 vorgesehen. Beide Einheiten 41 und 42 liefern je ein Messignal 43 und 44, welche zu einer Phasenmesseinheit 45 geführt werden. Ausgangsseitig an dieser Phasenmesseinheit 45 führt ein Rückkoppelsignal 46 über einen Verstärker 47 auf einen Vergleicher 48. Zum Vergleicher 48 führt als weiteres Eingangssignal ein Führungssignal 49. Ausgangsseitig des Vergleichers 48 ist ein Regelabweichungssignal 50 definiert, das auf den Eingang des Reglers 40 führt.

Eine solche Speise- und Messeinrichtung regelt die Frequenz der Wechselspannung so aus, dass Spannung und Strom immer in Phase bleiben. Der VCO-Regler 40 erhält vom Vergleicher 48 das Führungssignal 49 in Form eines Gleichspannungssignals bestimmten Pegels und liefert ausgangsseitig an den piezoelektrischen Motor 10 eine sinusförmige Wechselspannung bestimmter Frequenz. Dabei misst die Strommesseinheit 41 den Momentanwert des Stromes sowie die Spannungmesseinheit 42 den Momentanwert der Spannung. Beide geben je ein proportionales Messignal 43 bzw. 44 an die Phasenmesseinheit 45 weiter, welche die dazwischenliegende Phasenverschiebung ermittelt und ein äquivalentes Rückkopplungssignal 46 über den Verstärker 47 an den Vergleicher 48 zurückführt. Der Vergleicher 48 vergleicht das verstärkte Rückkopplungssignal 46 mit dem ursprünglichen Führungssignal 49 und erzeugt das Regelabweichungssignal 50 für den VCO-Regler 40.

Auf diese Weise wird im Betrieb die Frequenz der an den Motor 10 angelegten Speisespannung nach der Phasenverschiebung zwischen ihr und dem Strom ausgeregelt, d.h. die Frequenz der sinusförmigen Speisespannung variiert im Betrieb des Motors 10 periodisch. Mit andern Worten wird dem Einfluss der Schlitze 24a-c, bzw. 24' auf die Frequenz des lokalen Impedanzminimums und des Phasennulldurchganges dadurch Folge geleistet, indem die Betriebsfrequenz immer dem periodischen Abwandern der Grundmode auf der Frequenzskala folgt und so der optimale Arbeitspunkt beibehalten wird. Der im Betrieb des Motors 10 durch die Schlitze 24a-c, bzw. 24' hervorgerufene periodische Verlauf der Frequenz, welcher den Rückschluss auf die Rotorposition und/oder Drehzahl zulässt, kann beispielsweise durch folgende drei Möglichkeiten gemessen werden:

Das Gleichspannungssignal 50 wird in einem Vergleicher mit einem angelegten Referenzgleichspannungssignal verglichen. Die Differenz der beiden Spannungen gibt Aufschluss über die Abweichung der Frequenz der Speisespannung gegenüber einer Referenzfrequenz.

Eine zweite Möglichkeit sieht eine Zeitmesseinrichtung vor, die den Zeitraum zwischen den Nulldurchgängen der Speisewechselsspannung misst und auf diese Weise Rückschluss auf die momentane Frequenz zulässt.

Bei einer dritten Möglichkeit werden die Anzahl Nulldurchgänge während einer gewissen Zeit gezählt. Diese Variante ist für den Einsatz in einer Quarzuhr vorteilhaft, weil hier mit der Quarzfrequenz von 32KHz auf einfache Weise ein Zeitfenster von einigen Millisekunden erzeugt werden kann. Die entsprechende Schaltung ist einfach aufgebaut und störunempfindlich.

Im folgenden werden zwei weitere, nicht in den Figuren gezeigte Speise- und Messeinrichtungen rein beispielsweise beschrieben, die wiederum einerseits einen piezoelektrischen Motors genannter Art speisen, anderseits aus dessen elektrische Impedanzspektrum die Rotorposition, bzw. die Rotordrehzahl ermitteln:

Eine zweite Speise- und Messeinrichtung entspricht einer Steuerung mit offenem Wirkungsablauf. Sie speist den Motor 10 mit einer Wechselspannung fester Frequenz und misst die durch die ändernde akustische Impedanz des Rotors 20, bzw. 20' verursachten Stromschwankungen. Diese Lösung ist vorwiegend für Fälle mit konstanter Last geeignet. Grundsätzlich ist es auch möglich, den Motor mit einem konstanten Wechselstrom zu speisen und die Spannungsschwankungen zu registrieren.

Eine dritte Speise- und Messeinrichtung sieht eine Wechselspannungsquelle vor, deren frequenzbestimmendes Element der Motor 10 selbst ist. Demnach variiert die Frequenz der Wechselspannung gemäss dem periodischen Abwandern der Grundmode des Motors von selbst, wobei die Phasenverschiebung zwischen Strom und Spannung konstant bleibt. Für die Messung der Frequenz bieten sich die drei erwähnten Möglichkeiten an.

Durch die erfinderische Lösung ist es also möglich, Informationen in Bezug auf die Rotorposition, insbesondere in Bezug auf die Rotordrehzahl über die Speiseanschlüsse mittels einer einfachen Messeinrichtung in Erfahrung zu bringen. Die erfindungsgemässe Lösung weist eine lange Lebensdauer auf, besteht aus wenigen, einfachen Bestandteilen und beansprucht keinen zusätzlichen Platzbedarf im Motor selbst. Die ausserhalb des Motors vorgesehene Speise- und Messeinrichtung weist keinen nennenswerten Energiebedarf auf, weshalb sie kaum Einfluss auf den Wirkungsgrad des Motors ausübt, und ist sehr einfach und kostengünstig herzustellen.

Es ist auch möglich, anstelle von Schlitzen 24a-c bzw. 24' kreisrunde Bohrungen vorzusehen. Als Kriterium für die Form wird in erster Linie die resultierende Änderung des lokal betrachteten akustischen Impedanzspektrum herangezogen. Dieses ist grundsätzlich umso ausgeprägter, je dünner die inneren Rotorbereiche 26a-c bzw. 26' sind und je weiter sich die Schlitze 24a-c bzw. 24' erstrecken, d.h. je kleiner die Breiten 29a-c bzw. 29' und je grösser die Winkel 30a-c bzw. 30'. Falls die Winkel 30a-c bzw. 30' der Schlitze 24a-c bzw. 24' wesentlichen grösser als die Winkel 31a-c bzw. 31' der Vollmaterialbereiche 25a-c bzw. 25' sind, würde der Einfluss letzterer auf das elektrische Impedanzspektrum zu gering anfallen. Bei der in Fig.1 gezeigten Lösung erstrecken sich die Schlitze 24a-c wie auch die Vollmaterialbereiche 25a-c vorteilhafterweise um denselben Winkel von 60°.

In beiden gezeigten Beispielen wird die Information der Rotorposition bzw. -drehzahl aus nur zwei verschiedenen akustischen, bzw. elektrischen Impedanzspektren ermittelt, weil sich die Abstossflächen 19a-c entweder in der Nähe der Schlitze 24a-c bzw. 24' oder der Vollmaterialbereiche 25a-c bzw. 25' befinden. Dementgegen kann ein Rotor vorgesehen werden, der wie der Rotor 20 von Fig.1 mit der gleichen Anzahl Schlitze versehen ist, welche jedoch auf besondere Weise angeordnet sind. Alle drei Schlitze sowie zwei der drei dazwischenliegenden Vollmaterialbereiche erstecken sich über einen Winkel von etwa 50°. Der dritte Vollmaterialbereich ersteckt sich dagegen über einen Winkel von 110°. Durch diese Ausgestaltung des Rotors 20' gerät ein Resonatorzahn nach dem andern in den Einflussbereich eines Schlitzes. Derjenige Resonatorzahn, der zuerst in den Einflussbereich eines Schlitzes einläuft, verlässt diesen auch als erster. Somit ergibt sich daraus eine stufenförmige Beeinflussung des elektrischen Impedanzspektrums, wobei nacheinander folgende Zustände auftreten: kein Resonatorzahn in der Nähe eines Schlitzes, dann nur der erste, dann der erste und der zweite, dann alle drei, dann der zweite und der dritte, dann nur der dritte und wiederum keiner.

Diese sieben Zustände werden pro Rotorumdrehung dreimal durchlaufen. Der Effekt ist also eine erhöhte Auflösung. Diese beträgt im Gegensatz zum Beispiel von Fig.1 nicht 1:3, sondern 1:21. Durch diese Ausgestaltung des Rotors, d.h. durch die vorgeschlagenen Winkel der Schlitze und Vollmaterialbereiche nehmen einerseits die Schlitze wie die Vollmaterialbereiche in ähnlichem Mass Einfluss auf den das elektrische Impedanzspektrum. Ausnahme bildet der dritte Vollmaterialbereiches, der etwas länger Einfluss auf das elektrische Impedanzspektrum ausübt und somit deutlicher ist.

Um die Auflösung zu erhöhen, kann auch eine Vielzahl von Schlitzen oder Löchern im Rotor vorgesehen werden, z.B. 12 Schlitze und 12 Vollmaterialbereiche, die sich je um 15° erstrecken.

Grundsätzlich kann auf die äusseren Rotorbereiche 27a-c bzw. 27' verzichtet werden, so dass die Schlitze 24a-c bzw. 24' gegen aussen geöffnet sind und die Form von Nuten annehmen.

Weiter ist es zugungsten einer erhöhten Stabilität möglich, die Schlitze oder Nuten mit einem anderen Material teilweise oder ganz zu besetzten. Dieses Material muss sich jedoch in seinem Schwingungsverhalten von dem des Rotors 20, bzw. 20' deutlich unterscheiden.

Bei allen gezeigten Vorschlägen wird die Rotorposition bzw. die Rotordrehzahl über die Speiseanschlüsse des piezokeramischen Erregers 15 ermittelt. Es ist jedoch auch möglich, eine Sonde zusätzlich am Rotor 20, bzw. 20' vorzusehen, die beispielsweise während des Betriebes fortlaufend das Schwingungsverhalten des Rotors 20, bzw. 20' aufnimmt und in ein äquivalent schwankendes Gleichspannungssignal umwandelt, welches durch eine entsprechenden Schaltung als Rotorpositionsänderung ausgelegt wird.

Mit der erfindungsgemässen Lösung kann ferner auch die Rotorlaufgeschwindigkeit eines Linearmotors ermittelt werden.

Der erfindungsgemässe Motor kann auf Grund der obengenannten Vorzüge auch in einer Armbanduhr eingesetzt werden. Die Zeiteinstellung einer Uhr mit einem solchen Motor lässt sich mittels einer einfachen, herkömmlichen Schaltanordnung über die Krone ausführen.

## Patentansprüche

1. Piezoelektrischen Motor (10) mit zwei Elementen (13, 20; 20'), die einen Stator (13) und einen Rotor (20; 20') bilden, von denen mindestens ein erstes Element (13) Mittel (15) aufweist, die mechanische Schwingungen erzeugen, welche mindestens eine aktive Fläche (19a-c) eines aktiven Bereiches (18a-c) dieses ersten Elementes (13) in zyklische Bewegung versetzen und diese zyklische Bewegung der aktiven Fläche (19a-c) des ersten Elementes (13) auf mindestens eine passive Fläche (21; 21') des zweiten Elementes (20) einwirkt, sodass daraus eine relative Bewegung zwischen diesen beiden Elementen (13, 20; 20') hervorgeht, dadurch gekennzeichnet, dass dem zweiten Element (20; 20') im wesentlichen entlang der passiven Fläche (21; 21') mehrere Zonen (24a-c, 25a-c, 26a-c, 27a-c; 24', 25', 26', 27') zugeordnet sind, von denen mindestens eine erste Zone (24a-c, 26a-c, 27a-c; 24', 26', 27') ein erstes akustisches Impedanzspektrum und mindestens eine zweite Zone (25a-c; 25') ein zweites akustisches, vom ersten verschiedenes Impedanzspektrum aufweist.

2. Piezoelektrischer Motor nach Anpruch 1, dadurch gekennzeichnet, dass sich die erste Zone (24a-c, 26a-c, 27a-c; 24', 26', 27') und die zweite Zone (25a-c; 25') in ihrer Elastizität oder ihrer Massenträgheit oder in beidem unterscheiden.

3. Piezoelektrischer Motor nach Anpruch 2, dadurch gekennzeichnet, dass die erste Zone (26a-c, 26') und die zweite Zone (25a-c; 25') jeweils eine Wandstärke (23a-c, 29a-c; 23', 29') aufweisen, die sich voneinander unterscheiden.

4. Piezoelektrischer Motor nach Anpruch 3, dadurch gekennzeichnet, dass die erste Zone (26a-c; 26') an eine Aussparung (24a-c; 24') angrenzt.

5. Piezoelektrischer Motor nach Anspruch 4, dadurch gekennzeichnet, dass diese Aussparung (24a-c; 24') als Schlitz (24a-c; 24') ausgebildet ist, der durch das zweite Element (20; 20') hindurchführt und zur passiven Fläche (21; 21') im wesentlichen in konstantem Abstand (29a-c; 29') verläuft.

6. Piezoelektrischer Motor nach einem der vorangehenden Anprüche, dadurch gekennzeichnet, dass sich die erste Zone (24a-c, 26a-c, 27a-c; 24', 26', 27') über einen ersten Winkel (30a-c; 30') und die zweite Zone (25a-c; 25') über einen zweiten Winkel (31a-c; 31') erstreckt und diese Winkel (30a-c, 31a-c; 30', 31') im wesentlichen gleich sind.

7. Piezoelektrischer Motor nach einem der vorangehenden Ansprüche, dadurch gekennzeichnet, dass mindestens eine physikalische Grösse die Verschiedenheit zwischen dem ersten und dem zweiten akustischen Impedanzspektrum wiedergibt und diese Verschiedenheit ausserhalb des Motors feststellbar ist.

8. Piezoelektrischer Motor nach Anspruch 7, dadurch gekennzeichnet, dass diese physikalischen Grösse eine elektrische Grösse ist.

9. Piezoelektrischer Motor nach Anspruch 8, dadurch gekennzeichnet, dass die elektrische Grösse über dieselben elektrischen Anschlüsse ausserhalb des Motors feststellbar sind, über welche auch die Speisung der genannten Mittel (15), die Schwingungen im Ultraschallbereich erzeugen, erfolgt.

10. Piezoelektrischer Motor nach Anspruch 9, dadurch gekennzeichnet, dass in seinem Betriebszustand eine Speise- und Messeinrichtung mit einem offenen Wirkungsablauf bei fester Frequenz über die genannten elektrischen Anschlüsse als elektrische Grösse die Spannung oder den Strom erfasst und dessen zeitlich nicht gleichförmigen, periodischen Verlauf als ändernde, relative Position zwischen Stator (13) und Rotor (20; 20') interpretiert.

11. Piezoelektrischer Motor nach Anspruch 9, dadurch gekennzeichnet, dass in seinem Betriebszustand einen Speise- und Messeinrichtuntg mit einem geschlossenen Wirkungsablauf die Frequenz hinsichtlich einer konstanten, vorzugsweise den Wert Null betragenden Phasenverschiebung ausregelt, die zwischen Spannung und Strom, welche über die genannten elektrischen Anschlüsse erfassbar sind, besteht, und den zeitlichen nicht gleichförmiten, periodischen Verlauf der Frequenz als ändernde, relative Position zwischen Stator (13) und Rotor (20; 20') interpretiert.

12. Piezoelektrischer Motor nach Anspruch 9, dadurch gekennzeichnet, dass dieser im Betriebszustand mit seinem die Schwingungen im Ultraschallbereich erzeugenden Mittel (15) die Betriebsfrequenz vorgibt und eine Speise- und Messeinrichtung den zeitlich nicht gleichförmigen, periodischen Verlauf der Betriebsfrequenz als ändernde relative Position zwischen Stator (13) und Rotor (20; 20') interpretiert.
